# EUROPÄISCHE PATENTSCHRIFT

(11) **EP 1 303 020 B1**
(45) Veröffentlichungstag und Bekanntmachung des Hinweises auf die Patenterteilung: **03.10.2007**
(21) Anmeldenummer: 02018875.1
(22) Anmeldetag: 24.08.2002
(51) Int. Cl.: H02G 15/04, H01R 13/58, H01R 13/59, H01R 13/74

(54) **Elektrische Verkabelung mit Zugentlastung**
Electrical cabling with strain relief means
Câblage électrique à dispositif d'atténuation de contraintes de traction

(30) Priorität: 12.10.2001 DE 20116680 U; 12.10.2001 DE 20116682 U
(43) Veröffentlichungstag der Anmeldung: 16.04.2003
(73) Patentinhaber: Schmitt, Fred, 74388 Talheim (DE)
(72) Erfinder: Schmitt, Fred, 74388 Talheim (DE)
(74) Vertreter: Müller, Hans

(56) Entgegenhaltungen:
- DE-U1- 29 611 451
- US-A- 3 546 658
- US-A- 4 355 855

## Beschreibung

### TECHNISCHES GEBIET

Die Erfindung betrifft eine Verkabelung, die mit einer Zugentlastung ausgestattet ist. Durch die Zugentlastung soll verhindert werden, dass Zugkräfte, die in axialer Richtung von außen auf den Kabelmantel eines elektrischen Kabels einwirken, denselben relativ zu den im Inneren des Kabels vorhandenen Kabeladern verschieben. Ansonsten könnte nämlich der mechanisch feste Sitz der Adern in ihrer jeweiligen Kontaktierungsstelle im Inneren des Gehäuses verloren gehen.

### STAND DER TECHNIK

Elektrische Gehäuse, die mit elektrischen Komponenten bestückt sind, besitzen sogenannte Kabeldurchführungen, mittels derer elektrische Kabel durch die Gehäusewand in das betreffende Gehäuse hinein- beziehungsweise herausgeführt werden. Die für jeweils ein Kabel vorgesehene Kabeldurchführung besitzt einen Rohrstutzen. An der Außenseite des Rohrstutzens ist ein Flanschteil einstückig angeformt. Mittels dieses Flanschteils und einer auf den Rohrstutzen aufschraubbaren Mutter kann der Rohrstutzen mit seinem einen Ende an dem Randbereich der Gehäusewand, die die Durchgangsöffnung für das Kabel einrahmt, festgeklemmt werden. Auf das andere Ende des Rohrstutzens, das aus dem Gehäuse herausragt, wird eine Überwurfmutter aufgeschraubt. Ein rohrförmiges Dichtungselement ist im Inneren des Rohrstutzens platziert. Mit seiner einen Stirnseite sitzt dieses Dichtungselement auf einer umlaufenden, einspringenden Schulter des Rohrstutzens auf. Gegen die andere Stirnseite des Dichtungselementes drückt in axialer Richtung die Überwurfmutter. Durch Aufschrauben der Überwurfmutter auf den Rohrstutzen wird das Dichtungselement in axialer Richtung zusammengedrückt mit der Folge, dass sich das Dichtungselement in radialer Richtung nach innen entsprechend ausdehnt. Dadurch kann das Dichtungselement von außen gegen den Mantel des durch den Rohrstutzen hindurchgeführten Kabels drücken. Das Kabel kann so zusammengequetscht und folglich im Bereich der Gehäuseöffnung in axialer Richtung zugfest gehalten werden.

Um beim Aufdrehen der Überwurfmutter ein entsprechendes Mitdrehen des Dichtungselementes zu verhindern, was ein entsprechendes Mitdrehen des Kabelmantels zur Folge hätte, kann die Stirnfläche des Rohrstutzens gezahnt ausgebildet sein. Beim Zusammenquetschen des Dichtungselementes drückt sich dasselbe dann mit einer Schulter gegen die gezahnte Ringfläche und wird so an einer Drehbewegung um die Kabelachse gehindert.

Bei mit einer Kabelabschirmung versehenem Kabel ist es darüber hinaus bekannt, das entsprechende Schirmgeflecht mittels des Dichtungselementes axial gegen Stirnwandbereiche der Kabelverschraubung zu drücken. Eine zugfeste Halterung der Kabelabschirmung ist damit nicht gegeben.

Auch bei im Stand der Technik bekannten Rundsteckverbindern ist eine der Kabeldurchführung vergleichbar wirkende Zugentlastung vorhanden. Rundsteckverbinder besitzen ebenfalls einen Rohrstutzen, der wie bei der Kabeldurchführung an seinem einen Ende mit einer gezahnten Ringfläche versehen ist. Über dieses die gezahnte Ringfläche aufweisende Ende des Rohrstutzens wird ebenfalls eine Überwurfmutter aufgeschraubt. An der Überwurfmutter sind endseitig zwei Schellenhälften angeformt, die mit gegeneinander gerichteten Einwölbungen versehen sind. Die beiden Schellenteile liegen von außen an dem Mantel eines hindurchgeführten elektrischen Kabels an. Durch Aneinanderschrauben der beiden Schellenteile kann der Mantel zwischen ihnen eingequetscht gehalten werden. Die Überwurfmutter besitzt bei diesen Rundsteckverbindern eine gegenüber der Kabeldurchführung wesentlich vergrößerte axiale Länge, um das Verbinden wie beispielsweise Anlöten der in dem Kabel vorhandenen elektrischen Kontaktelemente mit den Gegen-Kontaktelementen, die im Bereich der gezahnten Ringfläche des Rohrstutzens enden, problemlos zu ermöglichen. Die gezahnte Ringfläche des Rohrstutzens gräbt sich im zusammengeschraubten Zustand in axialer Richtung in eine innen in der Überwurfmutter umlaufende Schulter ein. Dadurch soll ein unbeabsichtigtes Lösen der Überwurfmutter von dem Rohrstutzen verhindert werden.

Bei beiden Verkabelungseinrichtungen ist eine Zugentlastung vorhanden, die umso "kräftiger" wirkt, je stärker das Kabel zusammengequetscht wird. Die Wirkung der Zugentlastung hängt also davon ab, wie stark das Kabel zusammengedrückt wird. Ein entsprechend starkes Zusammendrücken des Kabels wirkt aber auch auf die im Inneren des Kabels vorhandenen Kabeladern beziehungsweise Kabelelemente ein, was in elektrischer Hinsicht unerwünscht ist. Es besteht also ein Zielkonflikt zwischen der Wirksamkeit der Zugentlastung und der elektrischen Funktionstüchtigkeit der betreffenden Kabelverbindung.

Relevanter Stand der Technik ist der US 4 355 855 A entnehmbar.

### DARSTELLUNG DER ERFINDUNG

Ausgehend von diesem vorbekannten Stand der Technik liegt der Erfindung die Aufgabe zugrunde, eine wirksame Zugentlastung bei elektrischen Verkabelungen anzugeben. Diese Erfindung ist durch die Merkmale des Hauptanspruchs gegeben. Weiterbildungen der Erfindung sind Gegenstand von sich an diesen Anspruch anschließenden weiteren Ansprüchen.

Die Erfindung geht von der Erkenntnis aus, dass bei elektrischen Verkabelungen der eingangs genannten Art jeweils eine bestimmte Rohrstutzen-Überwurfmutter-Konstellation vorhanden ist, die (auch) die Zugentlastung ermöglichen soll. Die Erfindung beinhaltet, dass zwischen dem jeweils vorhandenen Rohrstutzen und seiner auf ihn aufschraubbaren Überwurfmutter ein Formteil mit in axialer Richtung auskragendem hohlzylindrischen Stutzen eingesetzt werden kann. Der hohlzylindrische Stutzen sitzt eingeschoben zwischen dem Kabelmantel und den Kabeladern. Eine von außen auf das Kabel aufgeschobene Hülse quetscht den Kabelmantel zwischen sich und dem hohlzylindrischen Stutzen ein. Die Quetschkräfte, die die Zugentlastung für das betreffende elektrische Kabel beinhalten, wirken nicht vollständig quer durch das Kabel hindurch, sondern wirken lediglich auf den Mantel ein. Aufgrund der Unverformbarkeit des in dem Kabel einsitzenden hohlzylindrischen Stutzens bleiben die im Inneren des Kabels vorhandenen elektrischen Adern oder elektrischen Stiftelemente oder sonstigen elektrischen Kontaktelemente von Quetschkräften unbelastet.

Sofern die vorstehend erfindungsgemäß vorgesehenen Einsatzteile, wie das Formteil mit seinem hohlzylindrischen Stutzen, aus metallischem Material hergestellt werden, und auch der Rohrstutzen der Kabeldurchführung oder der Rohrstutzen des Rundsteckverbinders ebenfalls aus metallischem Material hergestellt sind, ist eine optimale HF (Hochfrequenz)-Dichtheit vorhanden. Bei den im Stand der Technik bekannten Kabeldurchführungen ist sie aufgrund des vorhandenen Kunststoff-Dichtelementes nicht vorhanden. Bei den Rundsteckverbindern sind bei den endseitig der Mutter vorhandenen Kabelschellen axiale Luftspalte regelmäßig vorhanden, die eine vollständige HF-Dichtheit nicht zulassen.

Das erfindungsgemäß jeweils vorgesehene Formteil kann mit dem an ihm auskragend angebrachten Stutzen einstückig verbunden sein. Es ist allerdings auch möglich, den auskragenden Stutzen an dem Formteil zu befestigen, wie insbesondere anzunieten.

Um das Formteil verdrehsicher anzuordnen, kann seine Ringfläche, mit der es an dem Rohrstutzen ansitzt, beispielsweise gezahnt ausgebildet sein.

Das Formteil kann ringförmig, dabei auch etwa scheibenförmig, ausgebildet sein, insbesondere dann, wenn es im Zusammenhang mit Kabeldurchführungen verwendet wird. Bei seiner Verwendung im Zusammenhang mit Rundsteckverbindern wird das Formteil in aller Regel eine relativ große axiale Länge aufweisen. Dies kann dadurch verwirklicht werden, dass eine Art Rohrstück zwischen dem Ringkörper und dem Rohrstutzen vorgesehen wird. Dieses Rohrstück kann einstückig an dem Formteil vorhanden sein. Auch das Rohrstück beziehungsweise das das Rohrstück aufweisende Formteil kann dann ebenfalls den Verdrehschutz wie beispielsweise die vorstehend bereits erwähnte gezahnte Ringfläche besitzen.

Um elektrische Verkabelungen der erfindungsgemäßen Art mit abgewinkelter, wie insbesondere mit 90° (Grad) abgewinkelten Kabelführungen zu ermöglichen, kann das hohlzylindrische Formteil eine abgewinkelte Form besitzen. Seine Längsachse weist dann einen Bogen oder Knick auf entsprechend dem Maß der Kabelabwinkelung.

Weitere Ausgestaltungen und Vorteile der Erfindung sind den in den Ansprüchen weiterhin aufgeführten Merkmalen sowie den nachfolgenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: eine teilweise geschnittene Seitenansicht einer Verkabelung bei einer Kabeldurchführung,
- Fig. 2: eine teilweise Ansicht längs des Pfeils 2 der Fig. 1,
- Fig. 3: eine teilweise geschnittene Seitenansicht einer Verkabelung bei einem Rundsteckverbinder,
- Fig. 4: eine ausschnittsweise Teilansicht eines hohlzylindrischen Formteils mit einstückig angeformtem hohlzylindrischen Stutzen, als Teil einer weiteren erfindungsgemäßen Verkabelung,
- Fig. 5: eine endseitige, teilweise geschnittene Seitenansicht einer anderen Verkabelung ähnlich der von Fig. 1 oder 2, mit einer abgewinkelten Kabeleinführung.

### WEGE ZUM AUSFÜHREN DER ERFINDUNG

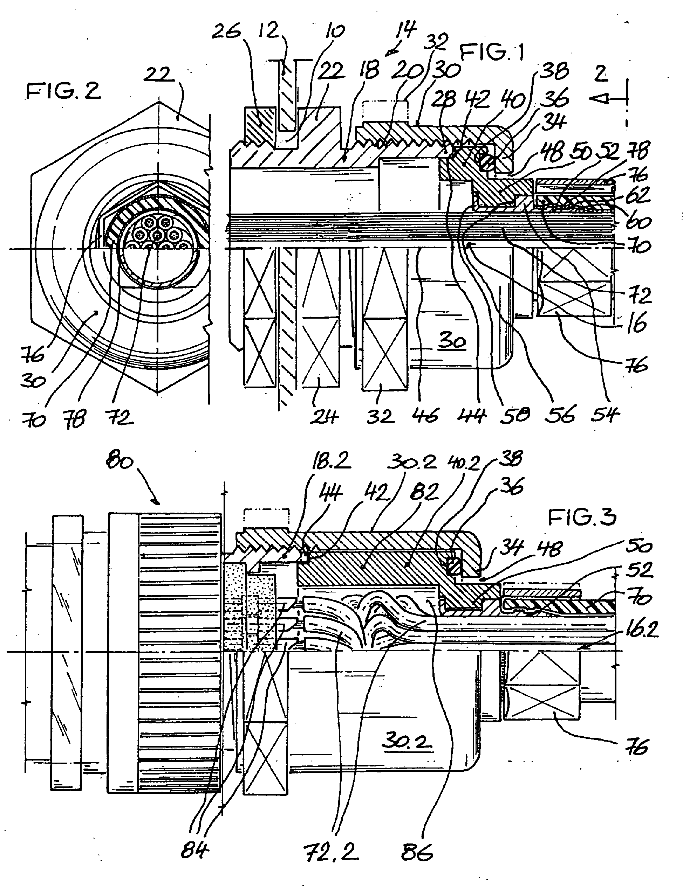

In einer kreisförmigen Öffnung 10 einer Gehäusewand 12 eines elektrischen Gehäuses ist eine Kabeldurchführung 14 für ein elektrisches Kabel 16 eingebaut (Fig. 1, 2).

Die Kabeldurchführung 14 besitzt einen durch die Öffnung 10 hindurchragenden Rohrstutzen 18, der mit einem Außengewinde 20 versehen ist. An dem Rohrstutzen 18 ist ein Flanschteil 22 mit einer Sechskantform 24 auskragend ängeformt. Zwischen diesem Flanschteil 22 und einer endseitig auf den Rohrstutzen 18 aufgeschraubten Mutter 26 wird der die Öffnung 10 einrahmende Randbereich der Gehäusewand 12 eingespannt gehalten. Auf diese Weise ist der Rohrstutzen 18 fest an der Gehäusewand 12 befestigt.

Auf das in Fig. 1 rechte Ende 28 des Rohrstutzens 18 ist eine Überwurfmutter 30 aufgeschraubt. Die Überwurfmutter 30 besitzt an ihrem linken Ende eine Sechskantform 32. Auf diese Weise können der Rohrstutzen 18 und die Mutter 26 und auch die Überwurfmutter 30 mit Norm-Schlüsseln verschraubt werden.

Ein an der Überwurfmutter 30 endseitig angeformter ringförmiger Deckelbereich 34 drückt in axialer Richtung gegen einen Dichtungsring 36, der in einer Ringnut 38 eines hohlzylindrischen Formteils 40 einsitzt. Das Formteil 40 ist in einer Art Ringkörper ausgebildet. Mit seinem in Fig. 1 linken, radial äußeren Randbereich, der als gezahnte Ringfläche 42 ausgebildet ist, liegt das Formteil 40 an der Stirnfläche 44 des Rohrstutzens 18 an, die ebenfalls gezahnt ist. Die gezahnte Ringfläche 42 des Formteils 40 und die gezahnte Stirnfläche 44 des Rohrstutzens 18 sind dadurch miteinander verkeilt, so dass eine gegenseitige Verdrehung um die Längsachse (Systemachse) 46 verhindert wird.

Das Formteil 40 ragt durch die zentrale Öffnung 48 des Deckelbereiches 34 der Überwurfmutter 30 mit einem Ringteil 50 hindurch.

Auf der Innenseite dieses Ringteils 50 ist ein hohlzylindrischer Stutzen 52 angenietet. Dieser hohlzylindrische Stutzen 52 besitzt eine etwa mittige radiale Verdickung 54, die an einer Schulter 56 des Ringteils 50 anliegt. Der in Fig. 1 linke Rand 58 des Stutzens 52 ist nach außen umgebördelt und liegt in Art einer Vernietung an dem linken

Ende dieses Ringteils 50 an. Das Ringteil 50 wird also zwischen der Verdickung 54 und dem umgebogenen Rand 58 des Stutzens 52 eingespannt. Dadurch sitzt der hohlzylindrische Stutzen 52 fest an dem hohlzylindrischen Formteil 40.

Das in Fig. 1 rechte Ende des hohlzylindrischen Stutzens 52 besitzt eine ringförmige Spitze 60 und umlaufende Rippen 62. Die Spitze 60 dient dazu, den hohlzylindrischen Stutzen 52 zwischen den Mantel 70 und die Adern 72 des Kabels 16 zu schieben, bevor das entsprechende Kabel 16 durch die Kabeldurchführung 14 hindurchgeführt wird. Der Mantel 70 endet also vor dem Ringteil 50 und wird nicht durch die Kabeldurchführung 14 hindurchgeführt.

Von außen ist eine Hülse 76 über den Mantel 70 geschoben. Mittels einer an sich bekannten Technik wird die Hülse 76 auf den Mantel 70 aufgequetscht. Der hohlzylindrische Stutzen 52 ist ausreichend biegesteif ausgebildet, so dass die Quetschkräfte, die beim Verformen der Hülse 76 auf das Kabel 16 ausgeübt werden, von dem hohlzylindrischen Stutzen 52 aufgefangen werden. Die im Inneren des hohlzylindrischen Stutzens 52 vorhandenen Adern 72 werden durch Querkräfte folglich nicht beeinflusst. Das Kabel 16 wird demzufolge durch Quetschkräfte gehalten, die lediglich auf seinen Mantel 70 - nicht auch auf seine Adern 72 - einwirken. Damit ist eine die Adern 72 nicht belastende Zugentlastung für das Kabel 16 bei der Kabeldurchführung 14 vorhanden.

Der hohlzylindrische Stutzen 52 wird bei dieser Zugentlastung nicht nur unter den Mantel 70, sondern auch unter ein elektrisch leitendes Schirmgeflecht 78 geschoben, das die Adern 72 außen umhüllt. Dieses Schirmgeflecht wird an der freien Stirnfläche des Mantels 70 abgetrennt. Die Adern 72 werden also im Bereich der Kabeldurchführung allseitig von elektrisch leitendem Material umhüllt, da der hohlzylindrische Stutzen 52 und das Formteil 40 und darüber hinaus auch der Rohrstutzen 18 aus elektrisch leitendem Material bestehen. Daher ist neben der optimalen Zugentlastung auch eine hochwirksame HF (Hochfrequenz)-Dichtheit bei der Kabeldurchführung 14 gewährleistet.

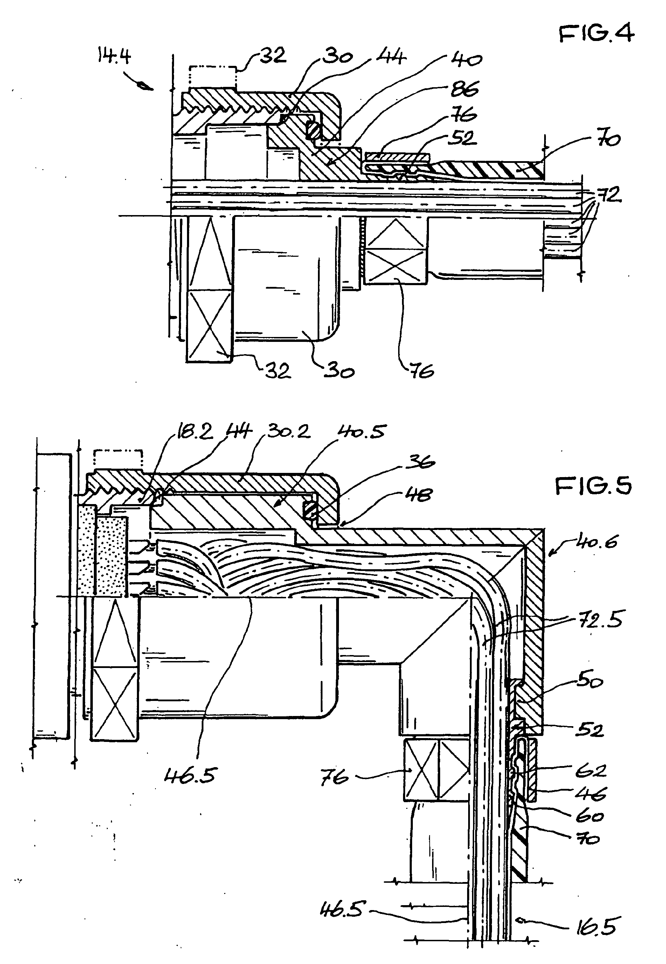

Der in Fig. 3 dargestellte Rundsteckverbinder 80 besitzt wie die Kabeldurchführung 14 einen Rohrstutzen 18.2, der mit einer gezahnten Stirnfläche 44 versehen ist. Auf den Rohrstutzen 18.2 ist von außen eine Überwurfmutter 30.2 aufgeschraubt, die mit ihrem Deckelbereich 34 wiederum gegen einen Dichtungsring 36 in axialer Richtung drückend anliegt. Der Dichtungsring 36 sitzt in einer Ringnut 38, die in einem hohlzylindrischen Formteil 40.2 endseitig ausgebildet ist. Das Formteil 40.2 entspricht dem Formteil 40 mit im Wesentlichen dem Unterschied, dass an seinem in Fig. 3 linken Endbereich ein Rohrstück 82 einstückig angeformt ist. Durch sein Rohrstück 82 besitzt das Formteil 40.2 eine gegenüber dem Formteil 40 vergrößerte axiale Länge. Am in Fig. 3 linken Ende des Rohrstückes 82 und damit des Formteils 40.2 ist wiederum die gezahnte Ringfläche 42 vorhanden, mit der das Formteil 40.2 auf der gezahnten Stirnfläche 44 des Rohrstutzens 18.2 - sich gegenseitig verkeilend - einsitzt.

Innerhalb des Rohrstutzens 18.2 enden Stiftkontakte 84 des Rundsteckverbinders 80. An diesen Stiftkontakten 84 sind die Enden von Adern 72.2 des Kabels 16.2 angelötet. Statt der Lötverbindungen könnten auch andere bekannte Kontaktverbindungen zwischen den Adern 72.2 und den Kontakten 84 verwendet werden.

Die Zugentlastung ist in gleicher Weise wie bei der Kabeldurchführung 14 (Fig. 1) vorhanden. Der Mantel 70 des Kabels 16.2 wird zwischen dem hohlzylindrischen Stutzen 52 und von der Hülse 76 eingequetscht gehalten. Die axiale unverrückbare Halterung wird dadurch erreicht, dass der hohlzylindrische Stutzen 52, wie vorstehend bereits für das Formteil 40 ausgeführt ist, in gleicher Weise auch an dem Formteil 40.2 angebracht ist.

Das axial relativ lange Rohrstück 82 ermöglicht es, bei der Montage dieser elektrischen Verkabelung an dem Rundsteckverbinder 80 zunächst die Zugentlastung an dem Kabel 16.2 vorzusehen, wobei die Enden der Adern 72.2 aus dem Bereich des noch nicht an den Rundsteckverbinder 80 anmontierten Rohrstückes 82 ausreichend lang in axialer Richtung herausschauen, um ein ungefährdetes Anlöten der Adern 72.2 an den Kontakten 84 zu ermöglichen. Beim Ansetzen des Formteils 40.2 mittels der Überwurfmutter 30.2 an dem Rohrstutzen 18.2 ist innerhalb des Bereiches des Rohrstückes 82 ein Hohlraum 86 vorhanden, in dem die Adern 72.2 sich verbiegen können, um ihre im zusammengebauten Zustand der Verkabelung nicht mehr benötigte Länge im Bereich der Verkabelung unterzubringen.

Die in Fig. 4 ausschnittsweise dargestellte Kabeldurchführung 14.4 entspricht bis auf sein hohlzylindrisches Teil 86 der Kabeldurchführung 14 gemäß Fig. 1. Dieses hohlzylindrische Teil 86 entspricht dem hohlzylindrischen Formteil 40 und dem hohlzylindrischen Stutzen 52 der in Fig. 1 und 2 dargestellten Kabeldurchführung 14. Das Formteil 40 und der Stutzen 52 sind bei diesem hohlzylindrischen Teil 86 einteilig miteinander verbunden. Eine entsprechende einteilige Ausführungsform ist auch bei dem in Fig. 3 dargestellten Formteil 40.2 und Stutzen 52 in gleicher Weise möglich.

In Fig. 5 ist der äußere, rechte Endbereich einer Verkabelung bei einem Rundsteckverbinder ausschnittsweise dargestellt, bei der ein Kabel 16.5 mit einer Abwinkelung von 90° (Grad) in den - in Fig. 3, nicht in Fig. 5 dargestellten - Rundsteckverbinder eingeführt und dort angeschlossen wird.

Bei der in Fig. 5 dargestellten Verkabelung ist ein abgewinkeltes Formteil 40.5 vorhanden, das im Inneren der Überwurfmutter 30.2 vorhanden ist und das dem Formteil 40.2 der Fig. 3 entspricht. So wird auch gemäß Fig. 5 das Formteil 40.5 über einen zwischengelegten Dichtungsring 36 in axialer Richtung gegen den Rohrstutzen 18.2 gedrückt, so wie das auch bei dem in Fig. 3 dargestellten Rundsteckverbinder 80 der Fall ist.

Außerhalb der zentralen Öffnung 48 der Überwurfmutter 30.2 besitzt das Formteil 40.5 eine abgewinkelte Form 40.6. Im vorliegenden Fall hat die Abwinkelung die Größe von 90° (Grad). Am auskragenden Ende dieser abgewinkelten Form 40.6 ist, wie bei dem Formteil 40.2, ein nach innen einspringendes, eine Verdickung darstellendes Ringteil 50 einstückig angeformt. Dieses Ringteil 50 wird von dem Stutzen 52 von innen her umklammert, so wie dies bei den hohlzylindrischen Formteilen 40 und 40.2 ebenfalls der Fall ist.

Die mit Rippen 62 versehene Spitze 60 des hohlzylindrischen Stutzens 52 ist, wie bei den vorstehenden Ausführungsformen, unter dem Kabelmantel 70 des Kabels 16.5 eingeschoben vorhanden. Der Endbereich dieses Kabelmantels 70 wird zwischen der Spitze 60 mit den Rippen 62 und einer von außen aufgequetschten Hülse 76 eingequetscht gehalten, so wie das bei den vorstehenden Ausführungsformen bereits beschrieben ist.

Im Bereich der abgewinkelten Form 40.6 werden die Adern 72.5 des Kabels 16.5 im Bogen in den Bereich der Überwurfmutter 30.2 hineingeführt. Durch die abgewinkelte Form 40.6 besitzt die Längsachse 46.5 eine im vorliegenden Beispielsfall um 90° (Grad) abgeknickte Längsführung.

Der wesentliche Unterschied des Formteils 40.5 gegenüber dem Formteil 40.2 besteht demnach darin, dass der Bereich mit dem nach innen einspringenden Ringteil 50 an das Ende des Bereiches der abgewinkelten Form 40.6 "verschoben" ist. Dadurch kann auch bei einer abgewinkelten Kabelführung die für die Befestigung des Kabels an der Verkabelung vorgesehene Konstruktion unverändert bleiben, indem nach wie vor der Kabelmantel zwischen einer Hülse 76 und einem hohlzylindrischen Stutzen 52 eingequetscht gehalten wird.

Ebenso wie bei der Fig. 4 kann auch bei der Verkabelung gemäß Fig. 5 der hohlzylindrische Stutzen 52 einteilig an dem Ringteil 50 angeformt und damit einteilig mit dem Formteil 40.5 verbunden sein.

Statt einer 90° (Grad) Kabelführung können auch beliebige andere Winkelführungen vorgesehen werden. Dazu sind lediglich entsprechende abgewinkelte Formteile 40.5 vorzusehen. Die anderen Konstruktionsteile der Verkabelung können dann unverändert bleiben.

## Patentansprüche

1. Elektrische Verkabelung, mit zumindest einem elektrischen Kabel (16, 16.2),
- das entweder an der eine kreiszylindrische Gehäuseöffnung (10) eines elektrische Einrichtungen aufnehmenden Gehäuses einrahmenden Gehäusewand (12),
- oder an einem im Querschnitt kreiszylindrischen Rundsteckverbinder (80)
jeweils mittels einer Zugentlastung befestigbar ist,
- mit einer den Kabelmantel (70) des Kabels (16, 16.2) einklemmend haltenden Haltevorrichtung (40, 40.2, 50, 52, 76),
- wobei bei dem durch die Gehäuseöffnung (10) hindurchführbaren Kabel (16) dasselbe im Inneren eines in der Gehäuseöffnung einsetzbaren Rohrstutzens (18) führbar ist, auf welchen Rohrstutzen (18) endseitig eine eine zentrale Öffnung (48) für das Kabel (16) freilassende Überwurfmutter (30) schraubbar ist, oder
- wobei bei dem an einem Rundsteckverbinder (80) anschließbaren Kabel (16.2) dasselbe im Inneren eines Rohrstutzens (18.2) endet, auf dem ebenfalls endseitig eine eine zentrale Öffnung (48) für das Kabel (16.2) freilassende Überwurfmutter (30.2) schraubbar ist,
**dadurch gekennzeichnet, dass**
- ein hohlzylindrisches Formteil (40, 40.2) auf den Rohrstutzen (18, 18.2) in axialer Richtung aufsetzbar ist,
- dieses Formteil (40, 40.2) durch die Überwurfmutter (30, 30.2) in axialer Richtung gegen den Rohrstutzen (18, 18.2) pressbar ist,
- ein hohlzylindrischer Stutzen (52) an dem Formteil (40, 40.2) in axialer Richtung auskragend vorhanden ist, der von der Kabelinnenseite her an den Kabelmantel (70) anlegbar ist,
- eine Hülse (76) im Querschnittsbereich des auskragenden Stutzens (52) an dem Kabel (16, 16.2) positionierbar und an dem Kabel (16, 16.2) fest anpressbar ist, so dass die das Formteil (40, 40.2), den hohlzylindrischen Stutzen (52) und die Hülse (76) umfassende Haltevorrichtung gleichzeitig von der Kabelinnenseite und von der Kabelaußenseite her an dem Kabelmantel (70) klemmend anlegbar ist.

2. Verkabelung nach Anspruch 1,
**dadurch gekennzeichnet, dass**
- der Rohrstutzen (18, 18.2), die Überwurfmutter (30, 30.2), das Formteil (40, 40.2) und der auskragende Stutzen (52) aus metallischem Material bestehen.

3. Verkabelung nach einem der vorstehenden Ansprüche,
**dadurch gekennzeichnet, dass**
- das Formteil (40, 40.2) einstückig mit dem auskragenden Stutzen (52) verbunden ist.

4. Verkabelung nach Anspruch 1 oder 2,
**dadurch gekennzeichnet, dass**
- der auskragende Stutzen (52) an dem Formteil (40, 40.2) befestigt, wie insbesondere angenietet ist.

5. Verkabelung nach einem der vorstehenden Ansprüche,
**dadurch gekennzeichnet, dass**
- ein Verdrehschutz an dem Formteil (40, 40.2) so vorhanden ist, dass in seinem auf dem Rohrstutzen (18, 18.2) aufsitzenden Zustand eine relative Verdrehung des Formteils (40, 40.2) gegenüber dem Rohrstutzen (18, 18.2) verhinderbar ist.

6. Verkabelung nach Anspruch 5,
**dadurch gekennzeichnet, dass**
- das Formteil (40, 40.2) als Ringkörper vorhanden ist,
- das Formteil (40, 40.2) eine als Verdrehschutz ausgebildete gezahnte Ringfläche (42) besitzt, mit der es an dem Rohrstutzen (18, 18.2) anlegbar ist.

7. Verkabelung nach einem der vorstehenden Ansprüche,
**dadurch gekennzeichnet, dass**
- ein Rohrstück (82) in axialer Richtung zwischen dem Formteil (40.2) und dem Rohrstutzen (18.2) vorhanden ist,
- das Rohrstück (82) eine gezahnte Ringfläche (42) besitzt, mit der es an dem Rohrstutzen (18.2) anlegbar ist.

8. Verkabelung nach Anspruch 7,
**dadurch gekennzeichnet, dass**
- das Rohrstück (82) einstückig mit dem Formteil (40.2) verbunden ist.

9. Verkabelung nach einem der vorstehenden Ansprüche,
**dadurch gekennzeichnet, dass**
- ein Dichtring (36) zwischen dem Formteil (40, 40.2) und der Überwurfmutter (30, 30.2) vorhanden ist.

10. Verkabelung nach Anspruch 1,
**dadurch gekennzeichnet, dass**
- das hohlzylindrische Formteil (40.5) eine abgewinkelte Form (40.6) besitzt, so dass seine Längsachse (46.5) abgewinkelt vorhanden ist.

11. Verkabelung nach Anspruch 10,
**dadurch gekennzeichnet, dass**
- das Formteil (40.5) einen abgewinkelten Endbereich besitzt,
- dieser abgewinkelte Bereich außerhalb der zentralen Öffnung (48) der auf das Formteil (40.5) aufschraubbaren Überwurfmutter (30.2) vorhanden ist,
- am freien Ende des abgewinkelten Endbereichs der hohlzylindrische Stutzen (52) vorhanden ist.

12. Verkabelung nach Anspruch 11,
**dadurch gekennzeichnet, dass**
- der hohlzylindrische Stutzen (52) an dem Ringteil (50) der abgewinkelten Form (40.6) des Formteils (40.5) befestigt, wie insbesondere angenietet ist.

13. Verkabelung nach Anspruch 11,
**dadurch gekennzeichnet, dass**
- der hohlzylindrische Stutzen (52) einteilig mit dem Ringteil (50) des Formteils (40.5) verbunden ist.

## Claims

1. Electrical wiring, having at least one electrical cable (16, 16.2), which can be attached
- either to the housing wall (12) which bounds a circular cylindrical housing opening (10) in a housing which holds electrical devices,
- or to a round plug connector (80) which has a circular cylindrical cross section,
in each case by means of strain relief,
- having a holding apparatus (40, 40.2, 50, 52, 76) which holds the cable sheath (70) of the cable (16, 16.2) such that it is clamped in,
- in which, with regard to the cable (16) which can be passed through the housing opening (10), said cable (16) can be guided in the interior of a tubular connecting stub (18), which can be inserted in the housing opening, onto the end of which tubular connecting stub (18) a union nut (30) can be screwed, leaving free a central opening (48) for the cable (16), or
- in which, with regard to the cable (16.2) which can be connected to a round plug connector (80), said cable ends in the interior of a tubular connecting stub (18.2), onto the end of which a union nut (30.2) can likewise be screwed, leaving free a central opening (48) for the cable (16.2),
**characterized in that**
- a hollow cylindrical molding (40, 40.2) can be fitted to the tubular connecting stub (18, 18.2) in the axial direction,
- this molding (40, 40.2) can be pressed against the tubular connecting stub (18, 18.2) in the axial direction by the union nut (30, 30.2),
- a hollow cylindrical connecting stub (52) is provided on the molding (40, 40.2), projects in the axial direction and can be placed against the cable sheath (70) from the inside of the cable,
- a sleeve (76) can be positioned on the cable (16, 16.2) in the cross-sectional area of the projecting connecting stub (52) and can be pressed firmly against the cable (16, 16.2), so that the holding apparatus, comprising the molding (40, 40.2), the hollow cylindrical connecting stub (52) and the sleeve (76), can be simultaneously placed against the cable sheath (70) from the inside of the cable and from the outside of the cable, clamping it.

2. Wiring according to claim 1,
**characterized in that**
- the tubular connecting stub (18, 18.2), the union nut (30, 30.2), the molding (40, 40.2) and the projecting connecting stub (52) are composed of metallic material.

3. Wiring according to one of the preceding claims,
**characterized in that**
- the molding (40, 40.2) is integrally connected to the.projecting connecting stub (52).

4. Wiring according to claim 1 or 2,
**characterized in that**
- the projecting connecting stub (52) is attached to the molding (40, 40.2), in particular being riveted to it.

5. Wiring according to one of the preceding claims,
**characterized in that**
- twisting protection is provided on the molding (40, 40.2) such that, when the molding is seated on the tubular connecting stub (18, 18.2), it is possible to prevent relative twisting of the molding (40, 40.2) with respect to the tubular connecting stub (18, 18.2).

6. Wiring according to claim 5,
**characterized in that**
- the molding (40, 40.2) is in the form of an annular body,
- the molding (40, 40.2) has a toothed annular surface (42) which forms the twisting protection and by means of which it can be placed against the tubular connecting stub (18, 18.2)

7. Wiring according to one of the preceding claims,
**characterized in that**
- a piece of tubing (82) is provided in the axial direction between the molding (40.2) and the tubular connecting stub (18.2),
- the piece of tubing (82) has a toothed annular surface (42), by means of which it can be placed against the tubular connecting stub (18.2).

8. Wiring according to claim 7,
**characterized in that**
- the piece of tubing (82) is integrally connected to the molding (40.2).

9. Wiring according to one of the preceding claims,
**characterized in that**
- a sealing ring (36) is provided between the molding (40, 40.2) and the union nut (30, 30.2).

10. Wiring according to claim 1,
**characterized in that**
- the hollow cylindrical molding (40.5) has an angled shape (40.6), so that its longitudinal axis (46.5) is angled.

11. Wiring according to claim 10,
**characterized in that**
- the molding (40.5) has an angled end region,
- this angled region is provided outside the central opening (48) of the union nut (30.2) which can be screwed to the molding (40.5),
- the hollow cylindrical connecting stub (52) is provided at the free end of the angled end region.

12. Wiring according to claim 11,
**characterized in that**
- the hollow cylindrical connecting stub (52) is attached to the annular part (50) of the angled shape (40.6) of the molding (40.5), in particular being riveted to it.

13. Wiring according to claim 11,
**characterized in that**
- the hollow cylindrical connecting stub (52) is integrally connected to the annular part (50) of the molding (40.5).

## Revendications

1. Câblage électrique, avec au moins un câble électrique (16, 16.2) qui peut être fixé
- soit à la paroi de boîtier (12), encadrant une ouverture de boîtier (10) cylindrique circulaire, d'un boîtier recevant des équipements électriques,
- soit à un connecteur rond (80) de section cylindrique circulaire,
chaque fois au moyen d'un dispositif d'atténuation de contraintes de traction ou dispositif de soulagement de traction
- comportant un dispositif de maintien (40, 40.2, 50, 50.2, 76) maintenant par serrage la gaine (70) du câble (16, 16.2),
- sachant que, concernant le câble (16) pouvant être dirigé à travers l'ouverture de boîtier (10), ce câble peut être dirigé à l'intérieur d'un embout tubulaire (18) pouvant être inséré dans l'ouverture de boîtier et sur l'extrémité duquel peut être vissé un écrou-raccord (30) laissant libre une ouverture centrale (48) pour le câble (16),
- ou sachant que, concernant le câble (16.2) pouvant être raccordé à un connecteur rond (80), ce câble se termine à l'intérieur d'un embout tubulaire (18.2) sur l'extrémité duquel peut être de même vissé un écrou-raccord (30.2) laissant libre une ouverture centrale (48) pour le câble (16.2),
**caractérisé en ce que**
- une pièce façonnée (40, 40.2) cylindrique creuse peut être montée en direction axiale sur l'embout tubulaire (18, 18.2),
- cette pièce façonnée (40, 40.2) peut être pressée en direction axiale contre l'embout tubulaire (18, 18.2) par l'écrou-raccord (30, 30.2),
- un embout cylindrique creux (52) est présent sur la pièce façonnée (40, 40.2) en faisant saillie en direction axiale, embout qui peut être appliqué contre la gaine de câble (70) par le côté intérieur du câble,
- un manchon (76) peut être positionné sur le câble (16, 16.2) dans la zone de section de l'embout en saillie (52), et pressé fixement contre le câble, de sorte que le dispositif de maintien comprenant la pièce façonnée (40, 40.2), l'embout cylindrique creux (52) et le manchon (76) peut être appliqué avec serrage contre la gaine de câble (70) à la fois par le côté intérieur et par le côté extérieur du câble.

2. Câblage selon la revendication 1, **caractérisé en ce que** l'embout tubulaire (18, 18.2), l'écrou-raccord (30, 30.2), la pièce façonnée (40, 40.2) et l'embout en saillie (52) sont constitués d'un matériau métallique.

3. Câblage selon l'une des revendications précédentes, **caractérisé en ce que** la pièce façonnée (40, 40.2) est reliée d'un seul tenant à l'embout en saillie (52).

4. Câblage selon la revendication 1 ou 2, **caractérisé en ce que** l'embout en saillie (52) est fixé sur la pièce façonnée (40, 40.2), par exemple notamment par rivetage.

5. Câblage selon l'une des revendications précédentes, **caractérisé en ce qu'**un blocage en rotation est présent sur la pièce façonnée (40, 40.2) de telle sorte que, dans son état monté sur l'embout tubulaire (18, 18.2), il ne peut pas y avoir de rotation relative de la pièce façonnée (40, 40.2) par rapport à l'embout tubulaire (18, 18.2).

6. Câblage selon la revendication 5, **caractérisé en ce que**
- la pièce façonnée (40, 40.2) est présente sous forme de corps annulaire,
- la pièce façonnée (40, 40.2) possède une surface annulaire dentée (42) prévue comme blocage en rotation, surface par laquelle la pièce peut être appliquée contre l'embout tubulaire (18, 18.2).

7. Câblage selon l'une des revendications précédentes, **caractérisé en ce que**
- une pièce tubulaire (82) est présente entre la pièce façonnée (40.2) et l'embout tubulaire (18.2) en direction axiale,
- la pièce tubulaire (82) possède une surface annulaire dentée (42) par laquelle la pièce peut être appliquée contre l'embout tubulaire (18.2).

8. Câblage selon la revendication 7, **caractérisé en ce que** la pièce tubulaire (82) est reliée d'un seul tenant à la pièce façonnée (40.2).

9. Câblage selon l'une des revendications précédentes, **caractérisé en ce qu'**un joint d'étanchéité annulaire (36) est présent entre la pièce façonnée (40, 40.2) et l'écrou-raccord (30, 30.2).

10. Câblage selon la revendication 1, **caractérisé en ce que** la pièce façonnée cylindrique creuse (40.5) possède une forme coudée (40.6), de sorte que son axe longitudinal (46.5) est coudé.

11. Câblage selon la revendication 10, **caractérisé en ce que**
- la pièce façonnée (40.5) possède une région terminale coudée,
- cette région terminale coudée est présente à l'extérieur de l'ouverture centrale (48) de l'écrou-raccord (30.2) pouvant être vissé sur la pièce façonnée (40.5),
- l'embout cylindrique creux (52) est présent à l'extrémité libre de la région terminale coudée.

12. Câblage selon la revendication 11, **caractérisé en ce que** l'embout cylindrique creux (52) est fixé sur la partie annulaire (50) de la forme coudée (40.6) de la pièce façonnée (40.5), par exemple notamment par rivetage.

13. Câblage selon la revendication 11, **caractérisé en ce que** l'embout cylindrique creux (52) est relié d'un seul tenant à la partie annulaire (50) de la pièce façonnée (40.5).
